# FASCICULE DE BREVET EUROPEEN

(11) **EP 1 537 262 B1**
(45) Date de publication et mention de la délivrance du brevet: **27.07.2016**
(21) Numéro de dépôt: 03769611.9
(22) Date de dépôt: 11.09.2003
(51) Int. Cl.: B82Y 30/00, C04B 35/63, C04B 35/80, C04B 35/83, D01F 9/127, F16D 69/02

(54) **STRUCTURE FIBREUSE TRIDIMENSIONNELLE EN FIBRES REFRACTAIRES, PROCEDE POUR SA REALISATION ET APPLICATION AUX MATERIAUX COMPOSITES THERMOSTRUCTURAUX.**
DREIDIMENSIONALE FASERSTRUKTUR, ENTHALTEND FEUERFESTE FASERN, VERFAHREN ZU IHRER HERSTELLUNG UND VERWENDUNG IN THERMOSTRUKTURELLEN VERBUNDWERKSTOFFEN
THREE DIMENSIONAL FIBER STRUCTURE CONTAINING REFRACTORY FIBERS, METHOD OF ITS PRODUCTION AND ITS USE IN THERMOSTRUCTURAL COMPOSITE MATERIALS

(30) Priorité: 12.09.2002 FR 0211302
(43) Date de publication de la demande: 08.06.2005
(73) Titulaire: HERAKLES, 33185 Le Haillan (FR); Centre National de la Recherche Scientifique, 75794 Paris Cedex 16 (FR)
(72) Inventeur: OLRY, Pierre, F-33000 BORDEAUX (FR); BRETON, Yannick, Claude, 69002 Lyon (FR); BONNAMY, Sylvie, F-45100 ORLEANS LA SOURCE (FR); NICOLAUS, Nathalie, F-69008 LYON (FR); ROBIN-BROSSE, Christian, F-33185 LE HAILLAN (FR); SION, Eric, 67380 Lingolsheim (FR)
(74) Mandataire: Delumeau, François Guy
(86) Numéro de dépôt international: PCT/FR2003/002692
(87) Numéro de publication internationale: WO 2004/025003

(56) Documents cités:
- WO-A-01/30694
- WO-A1-98/39250
- US-A- 4 663 230
- THOSTENSON E T ET AL: "Carbon nanotube/carbon fiber hybrid multiscale composites" JOURNAL OF APPLIED PHYSICS, 1 MAY 2002, AIP, USA, vol. 91, no. 9, pages 6034-6037, XP002243122 ISSN: 0021-8979
- SMILJANIC O ET AL: "Growth of carbon nanotubes on Ohmically heated carbon paper" CHEMICAL PHYSICS LETTERS, 20 JULY 2001, ELSEVIER, NETHERLANDS, vol. 342, no. 5-6, pages 503-509, XP002243123 ISSN: 0009-2614

## Description

### Arrière-plan de l'invention

L'invention concerne des structures fibreuses tridimensionnelles (3D) poreuses en fibres réfractaires, en particulier de telles structures destinées à constituer des préformes fibreuses pour la réalisation de pièces en matériau composite thermostructural.

Les matériaux composites thermostructuraux sont bien connus pour leurs bonnes propriétés mécaniques qui les rendent aptes à constituer des éléments de structures et pour leur capacité à conserver ces propriétés à des températures élevées. Ils comprennent notamment les matériaux composites carbone/carbone (C/C) ayant un renfort en fibres de carbone densifié par une matrice en carbone et les matériaux composites à matrice céramique (CMC) ayant un renfort en fibres réfractaires (carbone ou céramique) densifié par une matrice céramique. Les matériaux composites thermostructuraux trouvent des applications en particulier dans les domaines aéronautique et spatial et dans le domaine de la friction, notamment, dans ce dernier cas, pour des disques de freins d'avions.

La fabrication de pièces en matériau composite comprend habituellement la réalisation d'une préforme fibreuse qui est destinée à constituer le renfort fibreux du matériau composite et la densification de la préforme par la matrice du matériau composite.

La préforme est une structure fibreuse poreuse élaborée à partir de fibres, fils ou câbles. Des procédés typiques pour la réalisation de structures fibreuses 3D permettant d'obtenir des préformes dont la forme correspond à celle des pièces en matériau composite à fabriquer sont :
- le bobinage sur une forme ou mandrin,
- la réalisation de feutres épais,
- le tissage, tricotage ou tressage tridimensionnel,
- le drapage ou superposition de strates formées d'une texture bidimensionnelle (2D) et liées éventuellement les unes aux autres ; la texture 2D peut être un tissu, une nappe de filaments unidirectionnels, une nappe multidirectionnelle formée de plusieurs nappes unidirectionnelles superposées dans des directions différentes et liées entre elles par exemple par aiguilletage ou couture, une couche de feutre ou encore un complexe comprenant un tissu ou une nappe garni d'une couche de fibres libres liées au tissu ou à la nappe par aiguilletage.

Un procédé typique de réalisation d'une structure fibreuse 3D destinée notamment à l'élaboration de préformes pour disques de frein en matériau composite thermostructural consiste à superposer des strates formées de couches de tissu ou nappes multidirectionnelles et à les lier entre elles par aiguilletage. Un tel procédé est décrit notamment dans le document US 4 790 052. La structure fibreuse peut être réalisée à partir de fibres précurseurs du matériau carbone ou céramique du renfort fibreux du matériau composite. La transformation du précurseur en carbone ou céramique est alors réalisée par traitement thermique, avant densification par la matrice.

La structure fibreuse peut être réalisée directement à partir de fibres en carbone ou céramique. Dans ce cas, les couches de tissu ou nappes multidirectionnelles peuvent être munies d'une couche de fibres libres qui constituent une source de fibres susceptibles d'être prélevées par les aiguilles lors de l'aiguilletage des strates.

La densification d'une préforme fibreuse par la matrice peut être réalisée par voie liquide et/ou par voie gazeuse. La voie liquide consiste à imprégner la préforme par une composition liquide contenant un précurseur de la matrice et à transformer ensuite le précurseur par traitement thermique pour obtenir le matériau de la matrice désirée. Le précurseur est typiquement une résine. La voie gazeuse est l'infiltration chimique en phase vapeur. La préforme est placée dans un four dans lequel est admise une phase gazeuse contenant un ou plusieurs constituants formant précurseur gazeux du matériau de la matrice. Les conditions, notamment de température et de pression, dans le four sont réglées pour permettre une diffusion de la phase gazeuse au sein de la porosité de la préforme et le dépôt du matériau de la matrice sur les fibres de la préforme par décomposition d'un constituant de la phase gazeuse ou par réaction entre plusieurs constituants. Ces procédés sont bien connus en soi tant pour la formation de matrices en carbone que pour la formation de matrices en céramiques.

Il a déjà été proposé d'introduire des charges dans la porosité de structures fibreuses destinées à constituer le renfort fibreux de pièces en matériau composite thermostructural, avant densification des structures fibreuses par la matrice du matériau composite. Les buts visés sont de réduire la porosité des structures fibreuses, afin de réduire la durée de densification et/ou de conférer des propriétés particulières, notamment des propriétés mécaniques améliorées, aux pièces en matériau composite réalisées.

Les charges consistent notamment dans des poudres ou fibres courtes en carbone ou céramique. Un procédé connu d'introduction des charges consiste à imprégner la structure fibreuse 3D par une suspension des charges dans un liquide. Toutefois, il s'avère en pratique impossible de répartir les charges de façon désirée au sein des structures fibreuses, c'est-à-dire de façon homogène ou de façon inhomogène, mais contrôlée.

Il est connu d'utiliser des nanotubes de carbone pour constituer ou compléter le renfort fibreux de matériaux composites à matrice carbone ou céramique. On pourra par exemple se référer aux documents US 4 663 230, EP 1 154 050 et WO 98/39250.

Les nanotubes de carbone et leurs procédés d'élaboration sont bien connus.

Il est connu aussi de munir des fibres de carbone de nanotubes de carbone.

Ainsi, un processus pour faire croître des nanotubes de carbone sur des fibres de carbone est décrit dans un article de E.T. Thostenson et al. publié dans Journal of Applied Physics, Vol. 91, No. 9, 1 May 2002, p. 6034-6037. Un catalyseur de croissance de nanotubes est appliqué sur un faisceau de fibres par pulvérisation magnétron et une croissance de nanotubes est obtenue par exposition à une atmosphère d'acétylène. Le comportement d'un nanocomposite formé d'une fibre de carbone portant des nanotubes et de résine est étudié.

### Objets et résumé de l'invention

L'invention a pour but de fournir de façon satisfaisante des structures fibreuses cohérentes 3D qui permettent d'améliorer tant les propriétés de pièces en matériaux composites obtenues par densification de préformes formées de telles structures fibreuses que le processus de fabrication de ces pièces.

Ce but est atteint grâce à un procédé de réalisation d'une structure fibreuse tridimensionnelle poreuse comprenant un substrat tridimensionnel cohérent en fibres réfractaires, procédé dans lequel, conformément à l'invention, des nanotubes de carbone sont incorporés à la structure fibreuse par croissance sur les fibres réfractaires du substrat après imprégnation par une composition contenant au moins un catalyseur de croissance de nanotubes en carbone, de manière à obtenir une structure tridimensionnelle en fibres réfractaires enrichie en nanotubes de carbone.

Par substrat ou structure fibreux cohérent, on entend ici un substrat ou une structure capable de conserver sa cohésion lors de manipulations.

La présente invention réside dans l'enrichissement d'un substrat fibreux 3D en fibres réfractaires par des nanotubes de carbone obtenus par croissance sur les fibres réfractaires.

Ainsi, tout en conservant les qualités d'organisation et de cohésion d'une structure fibreuse 3D cohérente qui sont essentielles pour conférer des propriétés mécaniques désirées aux pièces en matériau composite dont le renfort fibreux comprend une telle structure, le procédé selon l'invention apporte, par l'incorporation de nanotubes de carbone, un certain nombre d'avantages.

Au niveau des structures fibreuses 3D, la croissance des nanotubes de carbone sur les fibres du substrat permet de répartir les nanotubes de carbone au sein de la porosité des structures fibreuses.

Au niveau du procédé de fabrication des pièces en matériau composite, on obtient une réduction de la durée de densification du fait de la réduction de porosité résultant de la présence des nanotubes de carbone dans le substrat 3D. En outre, les nanotubes réalisent cette réduction de porosité du substrat 3D par un fractionnement de celle-ci sans créer d'obstacles (obturations de pores) à la densification, que celle-ci soit réalisée par voie liquide ou par voie gazeuse. Le fractionnement de la porosité contribue à rendre celle-ci moins inhomogène donc à permettre une densification moins irrégulière.

Au niveau de pièces en matériau composite dont le renfort fibreux est formé par une telle structure fibreuse 3D, on obtient :
- une amélioration des propriétés mécaniques résultant de l'introduction d'éléments filamentaires de renfort supplémentaires de très haute résistance mécanique,
- une amélioration de la résistance à l'usure,
- une meilleure conductivité thermique.

Selon un mode de mise en oeuvre du procédé, il comprend les étapes successives de :
- imprégnation de strates bidimensionnelles en fibres réfractaires par une composition contenant au moins un catalyseur de croissance de nanotubes en carbone,
- formation d'un substrat tridimensionnel par superposition et liaison entre elles d'une pluralité de strates bidimensionnelles imprégnées, et
- croissance de nanotubes de carbone au sein du substrat tridimensionnel.

Les strates 2D sont avantageusement liées entre elles par aiguilletage.

Un enrichissement de la structure fibreuse 3D par des nanotubes de carbone est réalisé de façon uniforme dans tout le volume de la structure fibreuse.

Selon un autre mode de mise en oeuvre du procédé, il comprend les étapes successives de :
(a) imprégnation de strates tridimensionnelles en fibres réfractaires par une composition contenant au moins un catalyseur de croissance de nanotubes en carbone,
(b) croissance de nanotubes de carbone au sein des strates bidimensionnelles, et
(c) formation de la structure fibreuse bidimensionnelle par superposition et liaison entre elles de strates bidimensionnelles en fibres réfractaires dont au moins une partie comprend des nanotubes de carbone obtenus par les étapes (a) et (b).

Avec ce mode de mise en oeuvre du procédé, il est possible de former la structure fibreuse 3D par empilement de strates 2D dans lesquelles la quantité de nanotubes de carbone est variable. On peut donc, si désiré, moduler de façon contrôlée la quantité de nanotubes de carbone dans le volume de la structure fibreuse 3D, et même ménager des parties de structure fibreuse 3D exemptes de nanotubes de carbone.

Les strates 2D sont par exemple liées entre elles par aiguilletage. On pourra alors déposer une couche de fibres libres sur chacune d'au moins une partie des strates bidimensionnelles, avant aiguilletage.

Selon encore un autre mode de mise en oeuvre du procédé, il comprend les étapes successives de :
Selon encore un autre mode de mise en oeuvre du procédé, il comprend les étapes successives de :
   - réalisation du substrat tridimensionnel en fibres réfractaires,
   - imprégnation du substrat par une composition contenant au moins un catalyseur de croissance de nanotubes de carbone, et
   - croissance de nanotubes de carbone au sein du substrat tridimensionnel.

Ainsi, le substrat 3D en fibres réfractaires peut-il être enrichi de façon uniforme par des nanotubes de carbone dans tout son volume.

Le substrat 3D peut être réalisé par superposition de strates 2D et liaison de celles-ci entre elles, par exemple par aiguilletage. En variante, le substrat 3D peut être réalisé par tissage, tricotage ou tressage tridimensionnels d'un fil ou câble.

Selon une particularité du procédé, on réalise l'imprégnation par une composition contenant au moins un catalyseur de croissance de nanotubes de carbone sur des fibres réfractaires ayant une surface spécifique au moins égale à 10 m²/g, afin de bien répartir les particules de catalyseur à la surface des fibres. Un traitement de surface des fibres, par exemple par oxydation ménagée (par un gaz oxydant, par attaque chimique ou électrochimique, ou par plasma, par exemple), pourra alors être requis pour obtenir l'état de surface désiré.

L'imprégnation est avantageusement réalisée par une composition contenant une solution d'au moins un sel d'un métal constituant un catalyseur de croissance de nanotubes de carbone.

Une étape d'élimination de particules de catalyseur métallique par attaque acide ou traitement thermique à haute température pourra être prévue après réalisation de la structure fibreuse 3D enrichie en nanotubes de carbone.

Selon une particularité du procédé, on peut introduire des nanotubes de carbone supplémentaires dans la porosité d'au moins une partie superficielle de la structure fibreuse, par exemple par amenée à la surface de la structure fibreuse d'une suspension de nanotubes de carbone dans un liquide. On réalise ainsi un comblement de la porosité superficielle en réduisant fortement celle-ci. Après une étape ultérieure de densification de la structure fibreuse, par exemple par infiltration chimique en phase vapeur, cela permet d'obtenir une étanchéité de surface de la pièce en matériau composite réalisée.

L'invention a aussi pour objet une structure fibreuse 3D cohérente comprenant un substrat tridimensionnel poreux en fibres réfractaires et, en outre, des nanotubes de carbone qui s'étendent à partir de la surface d'au moins une partie des fibres réfractaires, sont répartis dans le volume de la structure fibreuse et réalisent un fractionnement de la porosité du substrat fibreux.

Les fibres réfractaires peuvent être en carbone ou en céramique, et le substrat 3D peut être formé de strates 2D liées les unes aux autres par aiguilletage.

De préférence, dans une structure fibreuse 3D selon l'invention, les nanotubes de carbone représentent en masse de 5 % à 200 % de la masse des fibres réfractaires. Les nanotubes de carbone peuvent être orientés de façon aléatoire autour des fibres. Ils peuvent être répartis de façon sensiblement uniforme dans tout le volume de la structure fibreuse ou être en quantité variable dans l'épaisseur de celle-ci.

L'invention a encore pour objet un procédé de réalisation d'une pièce en matériau composite thermostructural par densification par une matrice réfractaire d'une préforme fibreuse comprenant une structure fibreuse tridimensionnelle réalisée par un procédé tel que défini ci-avant, ainsi qu'une pièce en matériau composite thermostructural telle qu'elle peut être ainsi obtenue.

### Brève description des dessins

L'invention sera mieux comprise à la lecture de la description faite ci-après, à titre indicatif, mais non limitatif, en référence aux dessins annexés, sur lesquels :
- la figure 1 montre des étapes successives d'un mode de mise en oeuvre d'un procédé selon l'invention ;
- la figure 2 montre des étapes successives d'un autre mode de mise en oeuvre d'un procédé selon l'invention ;
- la figure 3 montre des étapes successives d'encore un autre mode de mise en oeuvre d'un procédé selon l'invention ; et
- les figures 4A, 4B et 4C sont des photographies prises au microscope électronique 2à balayage et avec des agrandissements différents montrant la croissance de nanotubes de carbone à la surface d'une fibre de carbone.

### Description détaillée de modes de réalisation

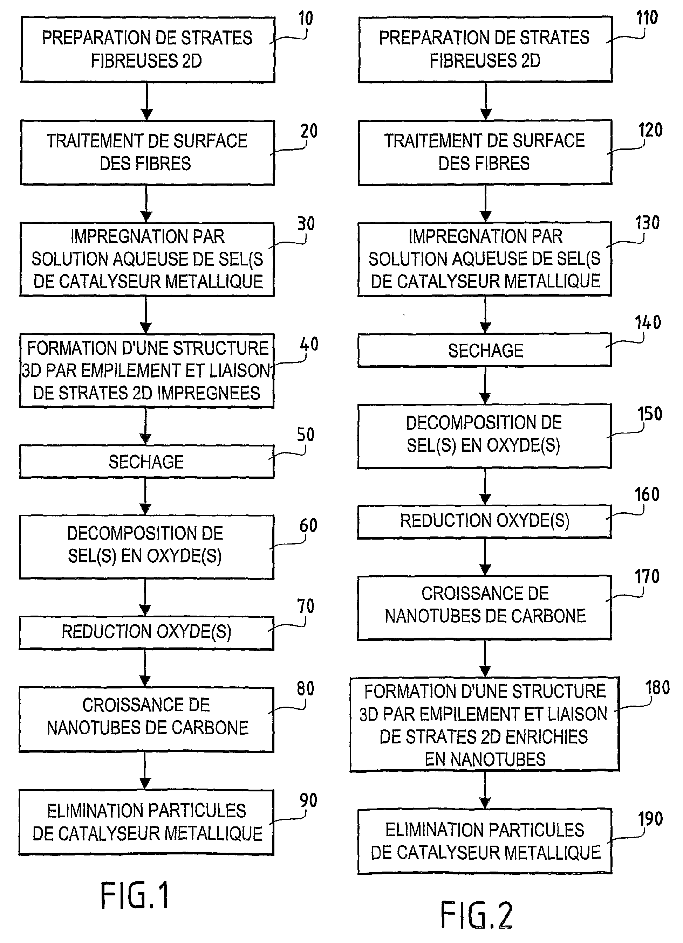

On se réfère d'abord à la figure 1 qui montre des étapes successives d'un procédé de réalisation d'une structure fibreuse tridimensionnelle enrichie en nanotubes de carbone, selon un premier mode de réalisation de l'invention.

La première étape 10 du procédé consiste à préparer des strates fibreuses bidimensionnelles (2D).

Les strates peuvent être sous formes de nappes unidirectionnelles ou multidirectionnelles, de tissus, de tricots, de tresses, de mats ou feutres minces. Les nappes, tissus, tricots, tresses peuvent être réalisés avec des fils, câbles ou rubans de filaments continus ou discontinus. Des fils, câbles ou rubans de filaments discontinus peuvent être obtenus par étirage-craquage de fils, câbles ou rubans en filaments continus. Une cohésion peut, si nécessaire, être apportée à des fils ou câbles de filaments discontinus par guipage ou torsion. Des nappes unidirectionnelles sont obtenues par étalement de fils, câbles ou rubans, éventuellement soumis à étirage-craquage, pour obtenir des nappes unidirectionnelles de filaments continus ou discontinus disposés sensiblement parallèlement les uns aux autres. Des nappes multidirectionnelles sont obtenues par superposition de nappes unidirectionnelles dans des directions différentes et liaison des nappes entre elles par exemple par couture ou aiguilletage. Les strates peuvent aussi être sous forme de complexes comprenant une couche formée par une nappe unidirectionnelle ou multidirectionnelle ou par un tissu et surmontée d'une couche de fibres discontinues formée de fibres libres, mat ou feutre, les deux couches étant liées ensemble par exemple par aiguilletage. Ces procédés d'obtention de strates 2D aptes à la réalisation de structures fibreuses 3D sont bien connus. On pourra se référer notamment aux documents US 4 790 052, US 5 228 175 et WO 98/44183.

Les strates peuvent être formées à partir de filaments, fils, câbles ou rubans en fibres réfractaires, notamment en fibres de carbone ou de céramique. En variante, les strates peuvent être formées à partir de filaments, fils, câbles ou rubans en fibres en précurseur de carbone ou céramique, la transformation du précurseur en carbone ou céramique étant réalisée par traitement thermique (pyrolyse) après formation des strates. A titre d'exemple, des précurseurs de fibres en carbone sont les fibres de polyacrylonitrile (PAN) préoxydé, les fibres de brai isotrope ou anisotrope et les fibres cellulosiques, par exemple les fibres de rayonne.

Il est préférable que les fibres réfractaires formant les strates 2D présentent un état de surface permettant une bonne répartition à leur surface de particules de catalyseur de croissance de nanotubes en carbone.

Dans le cas de fibres en carbone, les fibres à précurseur rayonne présentent une surface spécifique relativement élevée (typiquement de l'ordre de 250 m²/g), donc un état de surface favorable à cet effet.

Il n'en est généralement pas ainsi avec des fibres carbone à précurseur brai ou PAN préoxydé qui requièrent alors de préférence un traitement de surface (étape 20). Ce traitement de surface peut être un traitement d'activation modérée, par exemple par oxydation sous air (ou vapeur d'eau et/ou dioxyde de carbone) permettant d'amener la surface spécifique des fibres en carbone à une valeur de préférence supérieure à 10 m²/g. Il est possible aussi de réaliser un traitement de surface par attaque chimique, notamment par de l'eau oxygénée, par attaque acide, par exemple par acide nitrique, ou encore par attaque électrochimique, par plasma...

Dans le cas de fibres en céramique, le traitement de surface peut consister à munir des fibres d'un revêtement en carbone afin d'obtenir une surface spécifique désirée, éventuellement après activation. Le revêtement carbone peut être une couche de carbone pyrolytique formée sur les fibres par infiltration chimique en phase vapeur ou un revêtement de carbone pyrolytique obtenu par pyrolyse d'une couche d'un précurseur de carbone déposé sur les fibres, par exemple une couche de résine phénolique, de résine furanique ou autre résine à taux de coke non nul.

On notera que le traitement de surface des fibres en carbone ou céramique peut être réalisé avant formation des strates 2D, lorsque celles-ci sont réalisées à partir de filaments, fils, câbles ou rubans en fibres de carbone ou céramique.

Les strates 2D après traitement de surface éventuel des fibres, sont imprégnées par une solution aqueuse d'un ou plusieurs sels de catalyseur métallique de croissance de nanotubes de carbone (étape 30). Comme connu en soi, les catalyseurs de croissance de nanotubes de carbone sont des métaux en particulier choisis parmi le fer, le cobalt et le nickel. Ces métaux peuvent être utilisés seuls ou en alliages. Les sels utilisés sont par exemple des nitrates, acétates. L'imprégnation peut être réalisée par immersion des strates dans un bain ou par aspersion des strates.

La concentration en sel(s) dans la solution aqueuse est telle que la quantité de catalyseur (calculée en modes de métal) est comprise de préférence entre 0,01 % et 1 % molaire.

Les strates 2D imprégnées et éventuellement essorées sont ensuite superposées et liées les unes aux autres pour former une structure 3D cohérente (étape 40). La liaison peut être réalisée par implantation de fils transversalement aux strates, par couture ou, de préférence, par aiguilletage, par exemple comme décrit dans le document US 4 790 052 précité.

L'aiguilletage est réalisé de préférence sur les strates humides afin d'éviter des problèmes qui pourraient être rencontrés par la présence de sels métalliques solides après séchage des strates. Afin de faciliter le prélèvement de fibres par les aiguilles pour leur transfert à travers les strates, les strates 2D comprennent de préférence des filaments discontinus, par exemple en étant formées soit de nappes ou tissus en fils, câbles ou rubans de filaments discontinus, soit de complexes comprenant une couche de nappe ou tissu liée avec une couche de filaments discontinus.

Après aiguilletage, la structure 3D obtenue est séchée (étape 50) par exemple par passage en étuve ventilée.

Le ou les sels de catalyseur métalliques sont décomposés en oxyde(s) par traitement thermique, par exemple en portant la texture 3D séchée à une température comprise entre 100°C et 500°C (étape 60). Les étapes 50 et 60 peuvent avantageusement être confondues.

Ensuite, la texture 3D est introduite dans un four sous atmosphère réductrice pour réduire à chaud le ou les oxydes de catalyseur (étape 70). La réduction est par exemple réalisée sous gaz ammoniac (NH₃) ou sous gaz hydrogène (H₂) à une température par exemple comprise entre 400°C et 750°C. Le gaz ammoniac et l'hydrogène peuvent être dilués par un gaz neutre, par exemple de l'azote.

On obtient alors un substrat fibreux 3D en fibres réfractaires à la surface desquelles sont réparties de façon discontinue des particules métalliques de catalyseur de croissance de nanotubes de carbone.

La croissance des nanotubes de carbone (étape 80) est réalisée en amenant un précurseur gazeux du carbone au contact des fibres du substrat 3D placé dans un four à une température permettant la formation de carbone par décomposition (craquage) du précurseur gazeux. Le four peut être celui utilisé pour la réduction du ou des oxydes de catalyseur métallique.

Le précurseur gazeux est choisi parmi les hydrocarbures aromatiques ou non aromatiques. On utilise, par exemple, l'acétylène, l'éthylène, le propylène ou le méthane, la température dans le four étant alors d'environ 450°C à 1 200°C. Le gaz précurseur peut être mélangé avec de l'hydrogène, la présence d'hydrogène étant avantageuse notamment avec l'éthylène car elle conduit alors à une croissance plus rapide et plus complète des nanotubes. Le gaz précurseur peut aussi être avantageusement dilué par un gaz neutre, par exemple par de l'azote, afin de favoriser la diffusion et la répartition uniforme du gaz précurseur dans le four. Le taux de gaz précurseur dans le gaz de dilution est par exemple de 10 % à 50 % en volume. La pression dans le four est par exemple la pression atmosphérique. Le débit de gaz précurseur est choisi pour avoir un temps de séjour dans le four compris entre quelques secondes et quelques minutes. Le temps de séjour est défini comme le rapport entre le volume libre du four et le débit de gaz précurseur à la température du four.

Selon une variante du procédé, l'étape 70 de réduction du ou des oxydes de catalyseur peut être réalisée en même temps que la croissance des nanotubes, c'est-à-dire être confondue avec le début de l'étape 80, puisque l'on peut utiliser pour cette croissance une atmosphère comprenant un mélange d'éthylène et d'hydrogène. D'ailleurs, la décomposition même de l'éthylène produit de l'hydrogène naissant.

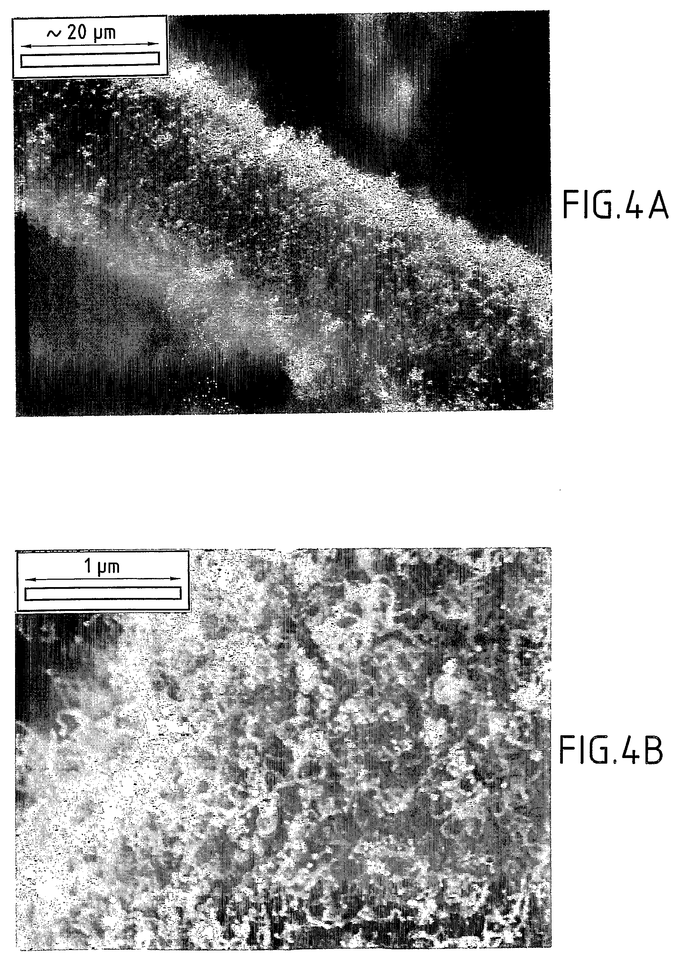

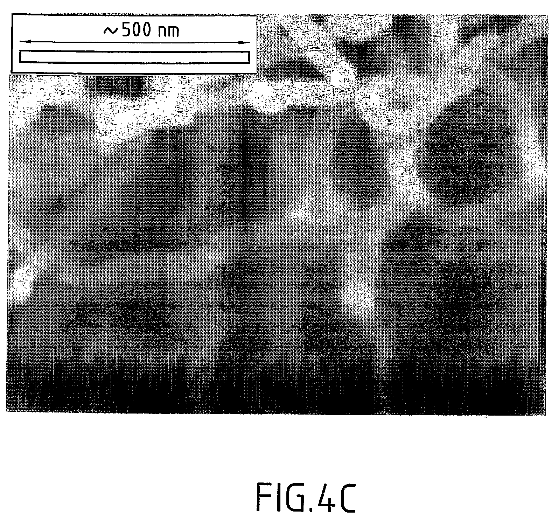

La présence des particules métalliques de catalyseur sur les fibres provoque la croissance de nanotubes de carbone à partir de la surface des fibres, à la périphérie de celles-ci, et avec des orientations aléatoires, comme le montrent les figures 4A, 4B et 4C dans le cas d'une fibre à précurseur cellulosique (viscose). Sur les figures 4A et 4B, la fibre reste partiellement visible. La figure 4C montre l'aspect des nanotubes.

La durée du processus est choisie en fonction de la quantité de nanotubes de carbone à introduire dans le substrat 3D en fibres réfractaires, de la quantité de catalyseur et de la taille du substrat. Cette durée peut être de plusieurs dizaines de minutes à plusieurs heures.

La quantité de nanotubes de carbone est choisie suffisante pour apporter une amélioration significative des propriétés de la structure fibreuse, sans toutefois obturer la porosité de celle-ci au-delà d'une limite à partir de laquelle la densification ultérieure de la structure fibreuse pourrait être rendue plus difficile en pénalisant l'accès à toute la porosité interne de la structure fibreuse. De préférence, la quantité de nanotubes de carbone formée est de 5 % à 200 % en masse par rapport à la masse de substrat 3D en fibres réfractaires.

Un traitement final d'élimination de particules métalliques de catalyseur (étape 90) peut être réalisé avant utilisation de la structure fibreuse 3D, notamment comme renfort fibreux de pièces en matériau composite. Ce traitement peut consister en une attaque acide, par exemple par de l'acide chlorhydrique et/ou par un traitement thermique à haute température, supérieure à 1 800°C, voire 2 000°C pour éliminer les particules métalliques par évaporation.

On notera que divers processus de croissance de nanotubes de carbone par dépôt de particules de catalyseur métallique sur un support et par craquage d'un gaz précurseur sont connus en soi, y compris le processus du type de celui décrit ci-avant, et sont utilisables pour la mise en oeuvre du procédé selon l'invention. Par exemple, le craquage peut être assisté par plasma.

Un autre mode de réalisation d'un procédé selon l'invention est résumé par la figure 2.

Il comprend une étape 110 de préparation de strates fibreuses 2D, une étape (éventuelle) 120 de traitement de surface des fibres et une étape 130 d'imprégnation des strates 2D par une solution aqueuse d'un ou plusieurs sels de catalyseur métallique de croissance de nanotubes de carbone, semblables aux étapes 10, 20 et 30 du procédé selon le mode de réalisation de la figure 1 décrit plus haut.

Après imprégnation, les strates 2D sont séchées par exemple par passage en étuve ventilée (étape 140).

Le ou les sels de catalyseur sont décomposés en oxyde(s) (étape 150) et le ou les oxyde(s) sont ensuite réduits (étape 160) comme décrit plus haut à propos des étapes 60 et 70 du procédé selon le mode de réalisation de la figure 1.

Une étape 170 de croissance de nanotubes de carbone sur les fibres réfractaires des substrats 2D est ensuite réalisée de façon semblable à ce qui est décrit à propos de l'étape 80 du procédé selon le mode de réalisation de la figure 1.

La croissance des nanotubes de carbone sur les substrats 2D de fibres de carbone peut avantageusement être réalisée en continu, c'est-à-dire en faisant défiler en continu les substrats 2D dans un four.

On obtient alors des strates fibreuses 2D en fibres réfractaires enrichies en nanotubes de carbone.

Une structure fibreuse 3D est réalisée par superposition et liaison entre elles des strates fibreuses 2D obtenues (étape 180). La liaison peut être réalisée par implantation de fils, par couture ou par aiguilletage. Dans ce dernier cas, préalablement à leur superposition, les strates 2D sont de préférence humidifiées pour amoindrir leur rigidité et éviter la ré-émission de nanotubes ou poussières de nanotubes dans l'environnement. Elles peuvent en outre être munies d'une couche ou d'un voile de fibres discontinues sous forme de fibres libres, mat, feutre ou ruban craqué, lesquelles fibres discontinues constituent une source de fibres pouvant être prélevées par les aiguilles pour être transférées à travers les strates. L'aiguilletage peut être réalisé comme décrit dans le document US 4 790 052.

La structure fibreuse 3D peut être réalisée par empilement et liaison entre elles de strates 2D semblables formées de fibres réfractaires enrichies de la même façon en nanotubes de carbone. On obtient alors une structure 3D enrichie en nanotubes de carbone de façon sensiblement uniforme dans tout son volume.

En variante, on peut réaliser une structure fibreuse 3D dans laquelle la quantité de nanotubes de carbone est variable dans l'épaisseur de la structure. A cet effet, on réalise des strates 2D enrichies de quantités différentes de nanotubes de carbone et on les superpose pour obtenir la répartition souhaitée de nanotubes de carbone au sein de la structure 3D. Il est possible d'utiliser des strates fibreuses 2D telles qu'obtenues à la fin de l'étape 110 pour constituer des zones de structure fibreuse 3D exemptes de nanotubes de carbone, si désiré.

Un traitement final 190 d'élimination des particules métalliques de catalyseur peut être réalisé, semblable au traitement de l'étape 90 du procédé selon le mode de réalisation de la figure 1. Ce traitement pourrait être effectué sur les strates 2D enrichies en nanotubes de carbone, avant formation de la structure 3D.

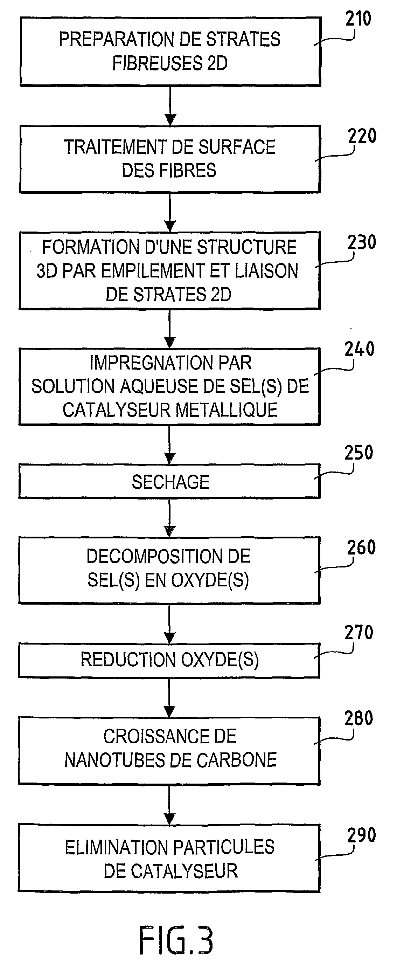

La figure 3 montre encore un troisième mode de réalisation d'un procédé selon l'invention.

Il comprend une étape 210 de préparation de strates fibreuses 2D et une étape (éventuelle) 220 de traitement de surface des fibres semblables aux étapes 10 et 20 du procédé selon le mode de réalisation de la figure 1 décrit plus haut.

Les strates fibreuses 2D sont empilées et liées entre elles pour former un substrat fibreux 3D en fibres réfractaires (étape 230). La liaison des strates entre elles peut être réalisée par implantation de fils, par couture ou par aiguilletage, l'aiguilletage étant alors réalisé comme décrit par exemple dans le document US 4 790 052.

On notera que l'étape (éventuelle) de traitement de surface des fibres peut en variante être réalisée après formation du substrat fibreux 3D.

Le substrat fibreux 3D obtenu est imprégné par une solution aqueuse d'un ou plusieurs sels de catalyseur métallique de croissance de nanotubes de carbone (étape 240), de façon semblable à ce qui est décrit plus haut à propos de l'étape 30 du procédé selon le mode de réalisation de la figure 1. L'imprégnation est toutefois de préférence réalisée par immersion du substrat 3D dans un bain, éventuellement avec établissement d'une dépression pour favoriser l'imprégnation à coeur.

On réalise ensuite des étapes de séchage (250), décomposition du ou des sels de catalyseur en oxyde(s) (260), réduction du ou des oxydes (270), croissance de nanotubes de carbone (280), et élimination éventuelle des particules métalliques de catalyseur (290), de façon semblable à ce qui est décrit plus haut à propos des étapes 50, 60, 70, 80 et 90 du procédé selon le mode de réalisation de la figure 1.

On notera que le troisième mode de réalisation décrit immédiatement ci-avant peut être mis en oeuvre en élaborant des substrats fibreux 3D par des processus autres que l'empilement et la liaison entre elles de strates fibreuses 2D. Les étapes 220 et suivantes pourront ainsi être appliquées à des substrats fibreux 3D constitués de feutres épais ou obtenus par tissage, tricotage ou tressage tridimensionnels de fils ou câbles.

Dans les modes de réalisation décrits plus haut, un traitement de surface éventuel des fibres (étapes 20, 120, 220) est effectué avant imprégnation des fibres par une solution aqueuse d'un ou plusieurs sels de catalyseur. En variante, le traitement de surface peut être réalisé après cette imprégnation et séchage, avant réduction du catalyseur.

La mise en place des particules métalliques de catalyseur sur les fibres par imprégnation par une composition liquide permet de bien répartir de façon discontinue ces particules sur les fibres. Une telle répartition est favorisée par le traitement de surface préalable des fibres.

Une texture fibreuse poreuse 3D enrichie en nanotubes de carbone telle qu'obtenue par le procédé selon l'un quelconque des modes de réalisation des figures 1 à 3 est utilisable pour constituer, éventuellement après découpe, une préforme fibreuse (ou renfort fibreux) de pièce en matériau composite thermostructural. La pièce est obtenue par densification de la préforme par le matériau constitutif de la matrice du matériau composite. Comme rappelé au début de la description, les processus de densification de préformes fibreuses par voie liquide ou par infiltration chimique en phase vapeur, pour former notamment une matrice carbone ou céramique, sont bien connus.

Les nanotubes de carbone réalisent un fractionnement de la porosité du substrat fibreux sur les fibres duquel ils sont accrochés. La durée nécessaire à la densification de la préforme est donc réduite. On notera que les nanotubes peuvent être décollés des fibres sur lesquelles ils ont crû, par exemple en appliquant une énergie ultrasonore au substrat fibreux. Les nanotubes ainsi libérés se répartissent de façon homogène dans l'ensemble des porosités du substrat.

De plus, l'orientation aléatoire des nanotubes autour des fibres conduit, après densification par la matrice, à un dépôt de matrice sur les nanotubes macroscopiquement désorienté par rapport aux fibres du substrat.

En outre, la présence des nanotubes de carbone au sein du renfort fibreux de la pièce en matériau composite thermostructural permet d'améliorer les propriétés mécaniques et la résistance à l'usure de la pièce en diminuant la porosité et en bénéficiant des qualités de renfort des nanotubes, tout en bénéficiant des propriétés apportées par la cohésion et l'organisation du substrat fibreux 3D portant les nanotubes de carbone.

La présence des nanotubes de carbone permet également d'améliorer la conductibilité thermique de la pièce.

Après obtention d'une structure fibreuse poreuse 3D enrichie en nanotubes de carbone comme décrit plus haut, et avant densification de celle-ci, des nanotubes de carbone supplémentaires peuvent être introduits dans une partie superficielle de la structure fibreuse, afin de combler en grande partie la porosité au voisinage de la surface de la structure fibreuse. Lors de la densification ultérieure par voie liquide ou par infiltration chimique en phase vapeur, la matrice déposée peut alors facilement réaliser une obturation de la porosité superficielle, de sorte que l'on obtient une pièce en matériau composite ayant une surface étanche. L'introduction de nanotubes de carbone supplémentaires peut être réalisée au niveau d'une partie seulement de la surface de la texture 3D, ou sur toute la surface de celle-ci.

Les nanotubes de carbone supplémentaires sont réalisés séparément et mis en suspension dans un liquide, par exemple de l'eau. La suspension est amenée à la surface de la texture 3D. Afin de faciliter l'introduction des nanotubes sur une certaine profondeur à partir de la surface, un agent mouillant ou surfactant peut être ajouté à la suspension, par exemple le dodécylsulfate de sodium, comme décrit notamment dans les documents WO 01/063028 et WO 02/055769.

Des exemples de réalisation d'une structure fibreuse 3D en fibres réfractaires enrichie en nanotubes de carbone conformément à l'invention seront maintenant décrits.

### Exemple 1

Des strates de tissu en carbone à précurseur cellulosique ayant subi un traitement de carbonisation jusqu'à environ 1 200°C sont imprégnées par une solution aqueuse de nitrate de fer 0,2 molaire. 20 strates ainsi imprégnées sont empilées et aiguilletées les unes sur les autres. L'aiguilletage est réalisé au fur et à mesure de l'empilement des strates en respectant une profondeur de pénétration des aiguilles sensiblement constante comme décrit dans le document US 4 790 052.

La structure fibreuse 3D humide obtenue est séchée sous air à 200°C en étuve ventilée, ce qui provoque en outre la décomposition du nitrate de fer en oxyde. La structure fibreuse 3D est introduite dans un four où la température est portée à 700°C sous atmosphère neutre (azote) pour éviter l'oxydation du carbone. La réduction de l'oxyde est alors réalisée en introduisant dans le four une atmosphère réductrice constituée d'un mélange en proportions volumiques égales de gaz ammoniac et d'azote pendant environ 60 min. Ensuite, la température étant maintenue à 700°C, on introduit dans le four une phase gazeuse comprenant de l'acétylène dilué dans de l'azote (1 volume d'acétylène pour 3 volumes d'azote), pendant une durée de 12 h. Après refroidissement sous azote jusqu'à température ambiante, on observe la présence de nanotubes de carbone s'étendant à partir de la surface des fibres carbone de la structure 3D. L'augmentation en masse mesurée par rapport à la masse des strates de tissu sèches est de 100 % environ.

### Exemple 2

Des strates de tissu en carbone à précurseur cellulosique telles que celles de l'exemple 1 sont imprégnées par une solution aqueuse de nitrate de fer 0,05 molaire.

Les strates sont séchées sous air à 200°C en étuve ventilée, ce qui provoque en outre la décomposition du nitrate de fer en oxyde. Les strates séchées sont introduites dans un four où la température est portée à 700°C sous atmosphère neutre (azote). La réduction de l'oxygène est alors réalisée en introduisant dans le four une atmosphère réductrice constituée d'un mélange en proportions volumiques égales de gaz ammoniac et d'azote, pendant une durée de 30 min. Ensuite, la température étant maintenue à 700°C, on introduit dans le four une phase gazeuse comprenant de l'acétylène dilué dans de l'azote (1 volume d'acétylène pour 3 volumes d'azote), pendant une durée de 2 h. Après refroidissement sous azote jusqu'à température ambiante, on constate la croissance de nanotubes de carbone sur les fibres en carbone des strates, l'augmentation en masse mesurée par rapport aux strates de tissu de départ étant de 50 % environ.

Les strates obtenues sont rendues plus souples par humidification et munies d'un voile de fibres de carbone discontinues libres (mat de fibres) qui est déposé à la surface des strates et lié à celles-ci par aiguilletage.

Plusieurs strates enrichies de nanotubes de carbone assouplies par humidification et munies d'un voile de fibres sont superposées et liées les unes aux autres par aiguilletage au fur et à mesure de l'empilement, comme décrit par exemple dans le document US 4 790 052. Après aiguilletage, la structure fibreuse 3D obtenue est séchée en étuve ventilée à 150°C.

### Exemple 3

On procède comme dans l'exemple 2 mais en imprégnant les strates de tissu par une solution aqueuse de nitrate de nickel 0,2 molaire et en prolongeant la durée de croissance des nanotubes de carbone jusqu'à 10 h, au lieu de 2 h. L'augmentation en masse mesurée après enrichissement des strates de tissu par les nanotubes de carbone est de 175 % environ.

### Exemple 4

Des strates de tissu en carbone à précurseur PAN sont traitées par de l'acétone pour éliminer l'ensimage des fibres de carbone puis imprégnées par une solution de nitrate de nickel 0,2 molaire.

Les strates sont séchées sous air à 200°C en étuve ventilée, ce qui provoque en outre la décomposition du nitrate de nickel en oxyde.

Une oxydation sous air à 420°C pendant 30 min est réalisée dans un four afin d'effectuer un traitement de surface (activation modérée) des fibres de carbone. Les strates sont ensuite portées à une température de 600°C sous atmosphère neutre (azote). La réduction de l'oxyde est alors réalisée en introduisant dans le four une atmosphère réductrice constituée d'un mélange en proportions volumiques égales de gaz ammoniac et d'azote, pendant une durée de 30 min. Ensuite, la température étant maintenue à 600°C, on introduit dans le four une phase gazeuse comprenant de l'acétylène dilué dans de l'azote (1 volume d'acétylène pour 3 volumes d'azote), pendant une durée de 2 h. Après refroidissement sous azote jusqu'à température ambiante, on constate la croissance de nanotubes de carbone sur les fibres en carbone des strates, l'augmentation de masse mesurée par rapport aux strates de tissu de départ étant de 150 % environ.

Les strates enrichies en nanotubes de carbone sont ensuite humidifiées, garnies d'un voile de fibres libres, puis empilées et liées les unes aux autres par aiguilletage comme dans l'exemple 2.

### Exemple 5

Des strates de tissu à précurseur cellulosique telles que celles de l'exemple 1 sont superposées et liées entre elles par aiguilletage. L'aiguilletage est réalisé au fur et à mesure de l'empilement des strates en respectant une profondeur de pénétration des aiguilles sensiblement constante comme décrit dans le document US 4 790 052.

Le substrat fibreux 3D obtenu est imprégné par une solution aqueuse de nitrate de fer comprenant 0,2 % molaire de fer. L'imprégnation est réalisée par trempage dans un bain.

La structure fibreuse 3D obtenue est ensuite traitée (séchage avec décomposition du nitrate de fer en oxyde, réduction de l'oxyde et croissance de nanotubes de carbone) comme dans l'exemple 1. L'augmentation de masse mesurée à la fin par rapport à la masse du substrat 3D sec est de 100 % environ.

### Exemple 6

Des strates constituées des nappes de fils en carbone à précurseur PAN sont superposées et liées entre elles par aiguilletage au fur et à mesure de l'empilement. Les nappes sont des nappes multidirectionnelles formées de plusieurs nappes unidirectionnelles en fibres de carbone discontinues nappées dans plusieurs directions et liées entre elles, par exemple comme décrit dans le document WO 98/44183. L'aiguilletage est réalisé au fur et à mesure de l'empilement des strates en respectant une profondeur de pénétration des aiguilles sensiblement constante, comme décrit dans le document US 4 790 052.

Le substrat fibreux 3D obtenu est traité par de l'acétone pour éliminer l'ensimage des fibres de carbone puis est imprégné par trempage dans un bain d'une solution aqueuse de nitrate de nickel comprenant 0,2 % molaire de nickel.

Après séchage sous air à 200°C en étuve ventilée, ce qui provoque en outre la décomposition du nitrate de nickel en oxyde, une oxydation sous air à 420°C dans un four pendant 30 min est réalisée pour effectuer un traitement de surface (oxydation modérée) des fibres de carbone du substrat. La température est ensuite portée à 600°C sous atmosphère neutre (azote). La réduction de l'oxyde est alors réalisée en introduisant dans le four une atmosphère réductrice constituée d'un mélange en proportions volumiques égales de gaz ammoniac et d'azote, pendant une durée de 30 min. Ensuite, la température étant maintenue à 600°C, on introduit dans le four une phase gazeuse comprenant de l'acétylène dilué dans de l'azote (1 volume d'acétylène pour 3 volumes d'azote), pendant une durée de 12 h. Après refroidissement sous azote jusqu'à température ambiante, on constate la croissance de nanotubes de carbone sur les fibres de carbone du substrat, l'augmentation de masse par rapport au substrat aiguilleté sec étant de 150 % environ.

### Exemple 7

Des strates de tissu en fibres de carbone à haute résistance à précurseur PAN sont soumises à un traitement de surface par plasma d'oxygène pendant 3 min afin de favoriser une bonne répartition du catalyseur métallique, puis imprégnées par une solution aqueuse de nitrate de nickel 0,2 molaire.

Les strates imprégnées sont séchées sous air à 150°C ce qui provoque la décomposition du nitrate de nickel en oxyde. La réduction de l'oxyde est réalisée à 650°C dans une enceinte sous atmosphère réductrice formée d'azote N₂ hydrogéné à 7 % en volume. A cette température de 650°C, est ensuite introduit un mélange comprenant, en volume, 2/3 d'éthylène et 1/3 d'azote hydrogéné à 7 %. La croissance de nanotubes est réalisée dans ces conditions pendant 5 h.

L'augmentation de masse mesurée par rapport à la masse des strates de tissu sec est de 70 % environ.

Les strates enrichies en nanotubes de carbone peuvent être utilisées pour former un substrat fibreux tridimensionnel par exemple comme décrit dans l'exemple 2.

### Exemple 8

Des strates de tissu en fibres de carbone à haute résistance à précurseur PAN sont soumises à un traitement de surface par plasma d'argon pendant 5 min puis imprégnées par une solution de nitrate de cobalt 0,1 molaire dans de l'éthanol.

Les strates imprégnées sont portées à une température de 650°C sous atmosphère d'azote N₂ et la réduction de l'oxyde de cobalt obtenu est réalisée à cette température sous atmosphère réductrice comprenant, en volume, 2/3 d'azote N₂ et 1/3 d'hydrogène H₂. Ensuite, à cette température de 650°, la croissance de nanotubes de carbone est réalisée comme dans l'exemple 7.

L'augmentation de masse mesurée par rapport à la masse des strates de tissu sec est de 99 % environ.

Les strates enrichies en nanotubes de carbone peuvent être utilisées pour former un substrat fibreux tridimensionnel par exemple comme décrit dans l'exemple 2.

### Exemple 9

On réalise des substrats fibreux tridimensionnels annulaires aiguilletés, en fibres de carbone et en forme de couronnes, chaque substrat ayant un diamètre extérieur de 150 mm, un diamètre intérieur de 80 mm, une épaisseur de 40 mm, un taux volumique de fibres de 22 % (pourcentage du volume apparent du substrat occupé effectivement par les fibres) et une masse de 180 g. De tels substrats peuvent être obtenus par découpe de structure fibreuse formée par superposition et aiguilletage de strates 2D comme décrit notamment dans le document US 4 790 052.

Les substrats 3D sont imprégnés par une solution de nitrate de nickel 0,05 molaire dans de l'éthanol, sous vide primaire.

Après séchage sous hotte pendant 5 h, les substrats sont placés en étuve et leur température est portée à 150°C sous atmosphère d'azote N₂. On réalise ensuite la décomposition du nitrate de nickel en oxyde et un traitement de surface (oxydation ménagée) des fibres de carbone en maintenant les substrats à 420°C dans un réacteur pendant 20 min, sous atmosphère d'azote N₂ comprenant 1 % en volume d'oxygène O₂, à une pression de 700 mbar.

Après purge de l'atmosphère du réacteur par balayage d'azote N₂, on élève la température de 420°C à 650°C et on introduit d'abord un mélange d'hydrogène H₂ et d'azote N₂ à volumes égaux pendant 60 min, puis de l'hydrogène H₂ pendant 10 min, la pression étant toujours de 700 mbar.

La température étant toujours maintenue à 650°C, on provoque la croissance de nanotubes en faisant circuler dans le réacteur une phase gazeuse comprenant, en volume, 1/3 d'hydrogène H₂ et 2/3 d'éthylène C₂H₄ pendant 6 h.

L'augmentation de masse mesurée à la fin, par rapport à la masse des substrats secs, est d'environ 41 %.

## Revendications

1. Procédé de réalisation d'une structure fibreuse tridimensionnelle poreuse comprenant un substrat tridimensionnel cohérent en fibres réfractaires,
**caractérisé en ce que** des nanotubes de carbone sont incorporés à la structure fibreuse par croissance sur les fibres réfractaires du substrat, après imprégnation par une composition comprenant au moins un catalyseur de croissance de nanotubes en carbone, de manière à obtenir une structure tridimensionnelle en fibres réfractaires enrichie en nanotubes de carbone.

2. Procédé selon la revendication 1, **caractérisé en ce qu'**il comprend les étapes successives de :
- imprégnation de strates bidimensionnelles en fibres réfractaires par une composition contenant au moins un catalyseur de croissance de nanotubes en carbone,
- formation d'un substrat tridimensionnel par superposition et liaison entre elles d'une pluralité de strates bidimensionnelles imprégnées, et
- croissance de nanotubes de carbone au sein du substrat tridimensionnel.

3. Procédé selon la revendication 2, **caractérisé en ce que** les strates bidimensionnelles sont liées entre elles par aiguilletage.

4. Procédé selon la revendication 1, **caractérisé en ce qu'**il comprend les étapes successives de :
(a) imprégnation de strates bidimensionnelles en fibres réfractaires par une composition contenant au moins un catalyseur de croissance de nanotubes en carbone,
(b) croissance de nanotubes de carbone au sein des strates bidimensionnelles, et
(c) formation de la structure fibreuse tridimensionnelle par superposition et liaison entre elles de strates bidimensionnelles en fibres réfractaires dont au moins une partie comprend des nanotubes de carbone obtenus par les étapes (a) et (b).

5. Procédé selon la revendication 4, **caractérisé en ce que** la structure fibreuse tridimensionnelle est formée par empilement de strates bidimensionnelles dans lesquelles la quantité de nanotubes de carbone est variable.

6. Procédé selon l'une quelconque des revendications 4 et 5, **caractérisé en ce que** les strates bidimensionnelles sont liées entre elles par aiguilletage.

7. Procédé selon la revendication 6, **caractérisé en ce que** l'on dépose une couche de fibres libres sur chacune d'au moins une partie des strates bidimensionnelles, avant aiguilletage.

8. Procédé selon l'une quelconque des revendications 6 et 7, **caractérisé en ce que** les strates bidimensionnelles munies de nanotubes de carbone sont humidifiées avant aiguilletage.

9. Procédé selon la revendication 1, **caractérisé en ce qu'**il comprend les étapes successives de :
- réalisation du substrat tridimensionnel en fibres réfractaires,
- imprégnation du substrat par une composition contenant au moins un catalyseur de croissance de nanotubes de carbone, et
- croissance de nanotubes de carbone au sein du substrat tridimensionnel.

10. Procédé selon la revendication 9, **caractérisé en ce que** la réalisation du substrat tridimensionnel comprend la superposition et la liaison entre elles de strates bidimensionnelles.

11. Procédé selon la revendication 10, **caractérisé en ce que** les strates bidimensionnelles sont liées entre elles par aiguilletage.

12. Procédé selon la revendications 9, **caractérisé en ce que** le substrat tridimensionnel en fibres réfractaires est réalisé par tissage, tricotage ou tressage tridimensionnel.

13. Procédé selon l'une quelconque des revendications 2 à 12, **caractérisé en ce que** l'on réalise l'imprégnation par une composition contenant au moins un catalyseur de croissance de nanotubes de carbone sur des fibres réfractaires ayant une surface spécifique au moins égale à 10 m²/g.

14. Procédé selon l'une quelconque des revendications 2 à 12, **caractérisé en ce que** l'on réalise un traitement de surface des fibres réfractaires afin de leur conférer une surface spécifique au moins égale à 10 m²/g.

15. Procédé selon la revendication 14, **caractérisé en ce que** l'on réalise un traitement de surface par oxydation ménagée.

16. Procédé selon la revendication 14, **caractérisé en ce que** l'on réalise un traitement de surface par attaque acide.

17. Procédé selon l'une quelconque des revendications 14 à 16, **caractérisé en ce que** le traitement de surface des fibres réfractaires est réalisé avant imprégnation par une composition contenant au moins un catalyseur de croissance de nanotubes de carbone.

18. Procédé selon l'une quelconque des revendications 14 à 16, **caractérisé en ce que** le traitement de surface des fibres réfractaires est réalisé après imprégnation par une composition contenant au moins un catalyseur de croissance de nanotubes de carbone.

19. Procédé selon l'une quelconque des revendications 2 à 18, **caractérisé en ce qu'**on réalise une imprégnation par une composition contenant une solution d'au moins un sel d'un métal constituant un catalyseur de croissance de nanotubes en carbone.

20. Procédé selon la revendication 19, **caractérisé en ce qu'**il comprend une étape d'élimination de particules de catalyseur métallique après réalisation de la structure fibreuse tridimensionnelle enrichie en nanotubes de carbone.

21. Procédé selon l'une quelconque des revendications 1 à 20, **caractérisé en ce qu'**on introduit des nanotubes de carbone supplémentaires dans la porosité d'au moins une partie superficielle de la structure fibreuse.

22. Procédé selon la revendication 21, **caractérisé en ce que** l'introduction de nanotubes de carbone supplémentaires est réalisée par amenée à la surface de la structure fibreuse, d'une suspension de nanotubes de carbone dans un liquide.

23. Procédé de réalisation d'une pièce en matériau composite thermostructural comportant la réalisation d'une préforme fibreuse comprenant une structure fibreuse tridimensionnelle et la densification de la préforme par une matrice réfractaire,
**caractérisé en ce que** la préforme est réalisée selon le procédé de l'une quelconque des revendications 1 à 22.

24. Structure fibreuse tridimensionnelle cohérente comprenant un substrat tridimensionnel poreux en fibres réfractaires, **caractérisée en ce que** la structure fibreuse comprend en outre des nanotubes de carbone qui s'étendent à partir de la surface d'au moins une partie des fibres réfractaires, sont répartis dans le volume de la structure fibreuse et réalisent un fractionnement de la porosité du substrat fibreux.

25. Structure selon la revendication 24, **caractérisée en ce que** les fibres réfractaires sont en carbone.

26. Structure selon la revendication 24, **caractérisée en ce que** les fibres réfractaires sont en céramique.

27. Structure selon l'une quelconque des revendications 24 à 26, **caractérisée en ce que** le substrat tridimensionnel est formé de strates bidimensionnelles liées les unes aux autres par aiguilletage.

28. Structure selon l'une quelconque des revendications 24 à 27, **caractérisée en ce que** les nanotubes de carbone représentent en masse de 5 % à 200 % de la masse du substrat en fibres réfractaires.

29. Structure fibreuse selon l'une quelconque des revendications 24 à 28, **caractérisée en ce que** les nanotubes de carbone sont orientés de façon aléatoire autour des fibres.

30. Structure fibreuse selon l'une quelconque des revendications 24 à 29, **caractérisée en ce que** les nanotubes de carbone sont répartis de façon sensiblement uniforme dans tout le volume de la structure fibreuse.

31. Structure fibrouse selon l'une quelconque des revendications 24 à 29, **caractérisée en ce que** la quantité de nanotubes de carbone est variable dans l'epaisseur de la structure fibreuse.

32. Pièce en matériau composite thermostructural comprenant un renfort fibreux sous forme d'une structure fibreuse tridimensionnelle et une matrice réfractaire, **caractérisée en ce que** la structure fibreuse est conforme à l'une quelconque des revendications 24 à 31.

## Patentansprüche

1. Verfahren zur Herstellung einer porösen, dreidimensionalen Faserstruktur, die ein kohärentes, dreidimensionales Substrat aus feuerfesten Fasern umfasst,
**dadurch gekennzeichnet, dass** Kohlenstoffnanoröhren durch Wachsen auf den feuerfesten Fasern des Substrats, nach Imprägnieren mit einer Zusammensetzung, die wenigstens einen Wachstumskatalysator für Kohlenstoffnanoröhren umfasst, in die Faserstruktur eingearbeitet werden, um eine mit Kohlenstoffnanoröhren angereicherte dreidimensionale Struktur aus feuerfesten Fasern zu erhalten.

2. Verfahren nach Anspruch 1, **dadurch gekennzeichnet, dass** es die aufeinanderfolgenden Schritte umfasst des:
- Imprägnierens von zweidimensionalen Lagen aus feuerfesten Fasern mit einer Zusammensetzung, die wenigstens einen Wachstumskatalysator für Kohlenstoffnanoröhren enthält,
- Ausbildens eines dreidimensionalen Substrats durch Übereinanderlegen und Verbinden untereinander einer Vielzahl von imprägnierten zweidimensionalen Lagen und des
- Wachsens von Kohlenstoffnanoröhren innerhalb des dreidimensionalen Substrats.

3. Verfahren nach Anspruch 2, **dadurch gekennzeichnet, dass** die zweidimensionalen Lagen durch Vernadeln untereinander verbunden werden.

4. Verfahren nach Anspruch 1, **dadurch gekennzeichnet, dass** es die aufeinanderfolgenden Schritte umfasst des:
(a) Imprägnierens von zweidimensionalen Lagen aus feuerfesten Fasern mit einer Zusammensetzung, die wenigstens einen Wachstumskatalysator für Kohlenstoffnanoröhren enthält,
(b) Wachsens von Kohlenstoffnanoröhren innerhalb der zweidimensionalen Lagen, und des
(c) Ausbildens der dreidimensionalen Faserstruktur durch Übereinanderlegen und Verbinden untereinander von zweidimensionalen Lagen aus feuerfesten Fasern, von denen wenigstens ein Teil durch die Schritte (a) und (b) erhaltene Kohlenstoffnanoröhren umfasst.

5. Verfahren nach Anspruch 4, **dadurch gekennzeichnet, dass** die dreidimensionale Faserstruktur durch Stapeln von zweidimensionalen Lagen, in denen die Menge an Kohlenstofifnanoröhren variabel ist, gebildet wird.

6. Verfahren nach einem der Ansprüche 4 und 5, **dadurch gekennzeichnet, dass** die zweidimensionalen Lagen durch Vernadeln untereinander verbunden werden.

7. Verfahren nach Anspruch 6, **dadurch gekennzeichnet, dass** auf jedem von wenigstens einem Teil der zweidimensionalen Lagen vor dem Vernadeln eine Schicht aus losen Fasern abgelegt wird.

8. Verfahren nach einem der Ansprüche 6 und 7, **dadurch gekennzeichnet, dass** die mit Kohlenstofifnanoröhren versehenen zweidimensionalen Lagen vor dem Vernadeln befeuchtet werden.

9. Verfahren nach Anspruch 1, **dadurch gekennzeichnet, dass** es die aufeinanderfolgenden Schritte umfasst des:
- Ausbildens des dreidimensionalen Substrats aus feuerfesten Fasern,
- Imprägnierens des Substrats mit einer Zusammensetzung, die wenigstens einen Wachstumskatalysator für Kohlenstoffnanoröhren enthält, und des
- Wachsens von Kohlenstoffnanoröhren innerhalb des dreidimensionalen Substrats.

10. Verfahren nach Anspruch 9, **dadurch gekennzeichnet, dass** die Ausbildung des dreidimensionalen Substrats das Übereinanderlegen und das Verbinden untereinander von zweidimensionalen Lagen umfasst.

11. Verfahren nach Anspruch 10, **dadurch gekennzeichnet, dass** die zweidimensionalen Lagen durch Vernadeln untereinander verbunden werden.

12. Verfahren nach Anspruch 9, **dadurch gekennzeichnet, dass** das dreidimensionale Substrat aus feuerfesten Fasern durch dreidimensionales Weben, Stricken oder Flechten hergestellt wird.

13. Verfahren nach einem der Ansprüche 2 bis 12, **dadurch gekennzeichnet, dass** das Imprägnieren mit einer Zusammensetzung, die wenigstens einen Wachstumskatalysator für Kohlenstoffnanoröhren enthält, auf feuerfesten Fasern mit einer spezifischen Oberfläche von wenigstens gleich 10 m²/g vollzogen wird.

14. Verfahren nach einem der Ansprüche 2 bis 12, **dadurch gekennzeichnet, dass** eine Oberflächenbehandlung der feuerfesten Fasern durchgeführt wird, um ihnen eine spezifische Oberfläche von wenigstens gleich 10 m²/g zu verleihen.

15. Verfahren nach Anspruch 14, **dadurch gekennzeichnet, dass** eine Oberflächenbehandlung durch schonende Oxidation durchgeführt wird.

16. Verfahren nach Anspruch 14, **dadurch gekennzeichnet, dass** eine Oberflächenbehandlung durch saures Ätzen durchgeführt wird.

17. Verfahren nach einem der Ansprüche 14 bis 16, **dadurch gekennzeichnet, dass** die Oberflächenbehandlung der feuerfesten Fasern vor dem Imprägnieren mit einer Zusammensetzung, die wenigstens einen Wachstumskatalysator für Kohlenstoffnanoröhren enthält, durchgeführt wird.

18. Verfahren nach einem der Ansprüche 14 bis 16, **dadurch gekennzeichnet, dass** die Oberflächenbehandlung der feuerfesten Fasern nach dem Imprägnieren mit einer Zusammensetzung, die wenigstens einen Wachstumskatalysator für Kohlenstoffnanoröhren enthält, durchgeführt wird.

19. Verfahren nach einem der Ansprüche 2 bis 18, **dadurch gekennzeichnet, dass** ein Imprägnieren mit einer Zusammensetzung durchgeführt wird, die eine Lösung von wenigstens einem Salz eines Metalls, das einen Wachstumskatalysator für Kohlenstoffnanoröhren bildet, enthält.

20. Verfahren nach Anspruch 19, **dadurch gekennzeichnet, dass** es einen Schritt zum Entfernen von Metallkatalysatorpartikeln nach dem Ausbilden der mit Kohlenstoffnanoröhren angereicherten dreidimensionalen Faserstruktur umfasst.

21. Verfahren nach einem der Ansprüche 1 bis 20, **dadurch gekennzeichnet, dass** zusätzliche Kohlenstoffnanoröhren in die Poren von wenigstens einem Oberflächenteil der Faserstruktur eingebracht werden.

22. Verfahren nach Anspruch 21, **dadurch gekennzeichnet, dass** das Einbringen von zusätzlichen Kohlenstoffnanoröhren dadurch vollzogen wird, dass der Oberfläche der Faserstruktur eine Kohlenstoffnanoröhren-Suspension in einer Flüssigkeit zugeführt wird.

23. Verfahren zur Herstellung eines Teils aus hochtemperaturbeständigem Verbundwerkstoff, umfassend das Ausbilden eines Faservorformlings mit einer dreidimensionalen Faserstruktur und das Verdichten des Vorformlings durch eine feuerfeste Matrix,
**dadurch gekennzeichnet, dass** der Vorformling nach dem Verfahren von einem der Ansprüche 1 bis 22 hergestellt ist.

24. Kohärente, dreidimensionale Faserstruktur, die ein poröses, dreidimensionales Substrat aus feuerfesten Fasern umfasst, **dadurch gekennzeichnet, dass** die Faserstruktur ferner Kohlenstoffnanoröhren umfasst, die sich von der Oberfläche von wenigstens einem Teil der feuerfesten Fasern aus erstrecken, im Volumen der Faserstruktur verteilt sind und eine Aufteilung der Poren des Fasersubstrats vollziehen.

25. Struktur nach Anspruch 24, **dadurch gekennzeichnet, dass** die feuerfesten Fasern aus Kohlenstoff bestehen.

26. Struktur nach Anspruch 24, **dadurch gekennzeichnet, dass** die feuerfesten Fasern aus Keramik bestehen.

27. Struktur nach einem der Ansprüche 24 bis 26, **dadurch gekennzeichnet, dass** das dreidimensionale Substrat von zweidimensionalen Lagen, die durch Vernadeln miteinander verbunden sind, gebildet ist.

28. Struktur nach einem der Ansprüche 24 bis 27, **dadurch gekennzeichnet, dass** die Kohlenstoffnanoröhren in Masse 5 % bis 200 % der Masse des Substrats aus feuerfesten Fasern ausmachen.

29. Faserstruktur nach einem der Ansprüche 24 bis 28, **dadurch gekennzeichnet, dass** die Kohlenstoffnanoröhren um die Fasern herum zufällig ausgerichtet sind.

30. Faserstruktur nach einem der Ansprüche 24 bis 29, **dadurch gekennzeichnet, dass** die Kohlenstoffnanoröhren im gesamten Volumen der Faserstruktur im Wesentlichen gleichmäßig verteilt sind.

31. Faserstruktur nach einem der Ansprüche 24 bis 29, **dadurch gekennzeichnet, dass** die Menge an Kohlenstoffnanoröhren in der Dicke der Faserstruktur variabel ist.

32. Teil aus hochtemperaturbeständigem Verbundwerkstoff, umfassend eine Faserverstärkung in Form einer dreidimensionalen Faserstruktur und eine feuerfeste Matrix, **dadurch gekennzeichnet, dass** die Faserstruktur entsprechend einem der Ansprüche 24 bis 31 ist.

## Claims

1. A method of making a porous three-dimensional fiber structure comprising a coherent three-dimensional substrate of refractory fibers,
the method being **characterized in that** carbon nanotubes are incorporated in the fiber structure by being grown on the refractory fibers of the substrate, after it has been impregnated by a composition comprising at least one catalyst for carbon nanotube growth, so as to obtain a three-dimensional structure made of refractory fibers and enriched in carbon nanotubes.

2. A method according to claim 1, **characterized in that** it comprises the successive steps of:
· impregnating two-dimensional plies of refractory fibers with a composition containing at least one catalyst for carbon nanotube growth;
· forming a three-dimensional substrate by superposing and bonding together a plurality of impregnated two-dimensional plies; and
· causing carbon nanotubes to grow within the three-dimensional substrate.

3. A method according to claim 2, **characterized in that** the two-dimensional plies are bonded together by needling.

4. A method according to claim 1, **characterized in that** it comprises the successive steps of:
a) impregnating refractory fiber two-dimensional plies with a composition containing at least one catalyst for carbon nanotube growth;
b) causing carbon nanotubes to grow within the two-dimensional plies; and
c) forming the three-dimensional fiber structure by superposing and bonding together two-dimensional plies of refractory fibers in which at least some of the plies contain carbon nanotubes obtained by steps a) and b).

5. A method according to claim 4, **characterized in that** the three-dimensional fiber structure is formed by stacking two-dimensional plies having varying quantities of carbon nanotubes.

6. A method according to claim 4 or claim 5, **characterized in that** the two-dimensional are bonded together by needling.

7. A method according to claim 6, **characterized in that** a layer of free fibers is deposited on each of at least some of the two-dimensional plies, prior to needling.

8. A method according to claim 6 or claim 7, **characterized in that** the two-dimensional plies with carbon nanotubes are moistened prior to needling.

9. A method according to claim 1, **characterized in that** it comprises the successive steps of:
· making a three-dimensional substrate of refractory fibers;
· impregnating the substrate with a composition containing at least one catalyst for carbon nanotube growth; and
· causing carbon nanotubes to grow within the three-dimensional substrate.

10. A method according to claim 9, **characterized in that** making the three-dimensional substrate includes superposing and bonding together two-dimensional plies.

11. A method according to claim 10, **characterized in that** the three-dimensional plies are bonded together by needling.

12. A method according to claim 9, **characterized in that** the three-dimensional substrate of refractory fibers is made by three-dimensional weaving, knitting, or braiding.

13. A method according to any one of claims 2 to 12, **characterized in that** impregnation is performed using a composition containing at least one catalyst for carbon nanotube growth on refractory fibers having a specific surface area of not less than 10 m².g.

14. A method according to any one of claims 2 to 12, **characterized in that** surface treatment is performed on the refractory fibers in order to impart a specific surface area thereon of not less than 10 m².g.

15. A method according to claim 14, **characterized in that** surface treatment is performed by controlled oxidation.

16. A method according to claim 14, **characterized in that** surface treatment is performed by acid attack.

17. A method according to any one of claims 14 to 16, **characterized in that** the surface treatment of the refractory fibers is performed prior to impregnation with a composition containing at least one catalyst for carbon nanotube growth.

18. A method according to any one of claims 14 to 16, **characterized in that** the surface treatment of the refractory fibers is performed after impregnation with a composition containing at least one catalyst for carbon nanotube growth.

19. A method according to any one of claims 2 to 18, **characterized in that** impregnation is performed with a composition containing a solution of at least one salt of a metal constituting a catalyst for carbon nanotube growth.

20. A method according to claim 19, **characterized in that** it includes a step of eliminating particles of metal catalyst after the carbon nanotube enriched three-dimensional structure has been made.

21. A method according to any one of claims 1 to 20, **characterized in that** additional carbon nanotubes are introduced into the pores of at least one surface portion of the fiber structure.

22. A method according to claim 21, **characterized in that** additional carbon nanotubes are introduced by bringing a suspension of carbon nanotubes in a liquid to the surface of the fiber structure.

23. A method of making a thermostructural composite material part, the method including making a fiber preform comprising a three-dimensional fiber structure and densifying the preform with a refractory matrix,
the method being **characterized in that** the preform is made in accordance with the method of any one of claims 1 to 22.

24. A coherent three-dimensional structure comprising a three-dimensional substrate of refractory fibers, the structure being **characterized in that** it further comprises carbon nanotubes which extend from the surface of at least some of the refractory fibers, said carbon nanotubes are distributed throughout the volume of the fiber structure and subdivide the pores of the fiber structure.

25. A structure according to claim 24, **characterized in that** the refractory fibers are made of carbon.

26. A structure according to claim 24, **characterized in that** the refractory fibers are made of ceramic.

27. A structure according to any one of claims 24 to 26, **characterized in that** the three-dimensional substrate is made of up two-dimensional plies bonded together by needling.

28. A structure according to any one of claims 24 to 27, **characterized in that** the carbon nanotubes constitute, by weight, 5% to 200% of the weight of the refractory fiber substrate.

29. A structure according to any one of claims 24 to 28, **characterized in that** the carbon nanotubes are randomly oriented around the fibers.

30. A structure according to any one of claims 24 to 29, **characterized in that** the carbon nanotubes are distributed throughout the volume of the fiber structure in a substantially uniform manner.

31. A structure according to any one of claims 24 to 29, **characterized in that** the quantity of carbon nanotubes varies along the thickness of the fiber structure.

32. A thermostructural composite material part comprising fiber reinforcement in the form of a three-dimensional fiber structure and a refractory matrix, the part being **characterized in that** the fiber structure is in accordance with any one of claims 24 to 31.
